# EUROPEAN PATENT SPECIFICATION

(11) **EP 1 966 870 B1**
(45) Date of publication and mention of the grant of the patent: **06.10.2010**
(21) Application number: 06830476.5
(22) Date of filing: 08.12.2006
(51) Int. Cl.: H02K 1/27

(54) **AN ELECTRIC MOTOR**
ELEKTROMOTOR
MOTEUR ÉLECTRIQUE

(30) Priority: 29.12.2005 TR 200505328
(43) Date of publication of application: 10.09.2008
(73) Proprietor: Arçelik Anonim Sirketi, 34950 Istanbul (TR)
(72) Inventor: EKIN, Cihad, 34950 Istanbul (TR)
(86) International application number: PCT/EP2006/069480
(87) International publication number: WO 2007/074036

(56) References cited:
- WO-A-2005/119879
- JP-A- 11 089 137
- JP-A- 2003 116 235
- JP-A- 2004 048 970

## Description

The present invention relates to an electric motor comprising a permanent magnet rotor.

In electric motors, e.g. in brushless dc motors, the permanent magnet rotors are used which are magnetic flux producing magnet segments integrated over the rotor stack formed of lamination plates stacked on a shaft. The magnets are integrated in the rotor stack either by methods of embedding in the rotor stack (embedded magnet) or by adhesion on the outer surface of the rotor by injection, gluing (surface magnet). The surface type magnets integrated on the rotor surface are shaped like an arc segment and are adhered peripherally on the rotor surface at equally spaced intervals leaving air gaps in between to prevent the formation of flux leakage. Since assembly of the magnets on the rotor by only adhesion of their contacting surfaces is not sufficient for resistance to centrifugal forces, supports are used that extend from the rotor towards between the magnets that are adhered on the rotor surface. Since the magnet holders are like extensions of the rotor lamination plate produced of ferromagnetic material easily passing magnetic flux, they result in flux leakage between the magnets and the performance of the motor reduces.

In the United States of America patent document no. US5345669, a plurality of arcuate magnetic elements are adhered on the rotor and there are ribs on the rotor surface matching the side shapes of the magnets. A cylindrical shell is slid over the adhered magnets and also a ring is slid on the upper and lower end plates of the rotor stack to prevent movement of the magnets in the vertical axis.

In the United States of America patent document no. US6084330, a hollow retaining shell is slip-fit around the magnetic element or elements and spring biasing members are inserted between the magnets and the channels on the rotor surface. The spring biasing members prevent relative movement of the magnets between the rotor stack and the retaining shell, and the magnets are restrained in the vertical axis by screwing annular end plates to the ends of the rotor stack.

In the United States of America patent document no. US4954736 permanent magnet segments are respectively disposed between gaps in the rotor stack and the gaps between the magnets are filled in with a thermosetting resin so that constant positioning of the magnets can be attained.

In the United States of America patent document no. US6707206, dented sections are provided for attaching the magnets to the rotor. When the magnets are disposed in these receptacles, the resilient plates around the channel are deformed to resiliently tightly clamp the magnets.

In the United States of America patent document no. US20020162939, the magnets are emplaced in the channels on the outer surface of the rotor matching the magnets and the dented sections on the outer surface of the rotor are deformed towards the magnets to secure the magnets on the rotor surface.

In the Japan patent document no. JP2004048970, the permanent magnet rotary electric machine comprises a rotor formed by fitting permanent magnets, respectively, in a plurality of the dovetail grooves formed on the circumferential surface of the rotor core.

In the Japan patent document no. JP11089137, permanent magnets just equal in member to the number of poles are embedded in a circumferential direction along the outer diameter of a rotor core, at least the centers of the permanent magnets are swelled in the center direction of the rotor core and the center part of a bridging part which supports the permanent magnets is enlarged in the inner rotor type permanent magnet type motor.

In the Japan patent document no. JP2003116235, flux barriers are disposed behind the permanent magnets which are divided and disposed in the rotor to maintain the breaking strength of the rotor and reduce a leaking flux in the rotor to increase the number of magnetic fluxes interlinking with a stator winding in a synchronous motor.

The aim of the present invention is the realization of an electric motor comprising a rotor of the permanent magnet type, wherein assembly of the magnets on the rotor is enhanced and flux leakage between magnets is prevented.

The electric motor realized in order to attain the aim of the present invention is explicated in the claims.

The electric motor of the present invention is a brushless dc motor generally used in actuating the household appliances..The electric motor comprises a stator and a permanent magnet rotor rotating inside the stator, with magnets assembled on its surface adjacently such that the opposite poles are situated contiguously. Between the equidistantly spaced magnets on the rotor surface, magnet holders are disposed extending outward from the rotor surface. At the center of each magnet holder, a slit-like air gap is provided to prevent flux leakage passage between magnets. The flux leakage that is prevented from passing through the air gaps, finds a way on the rotor yoke from around the air gap and tries to reach from one magnet to the other; however, in the embodiment of the present invention, flux leakage is prevented by an additional air gap bored on the rotor yoke aligned with the air gap. Thereupon, the flux leakage will try to get through a narrow opening between the magnet holder and the air gap but since the flux intensity is saturated in this region, flux leakage is entirely blocked and the said narrow opening serves like a flux insulator.

The electric motor realized in order to attain the aim of the present invention is illustrated in the attached figures, where:

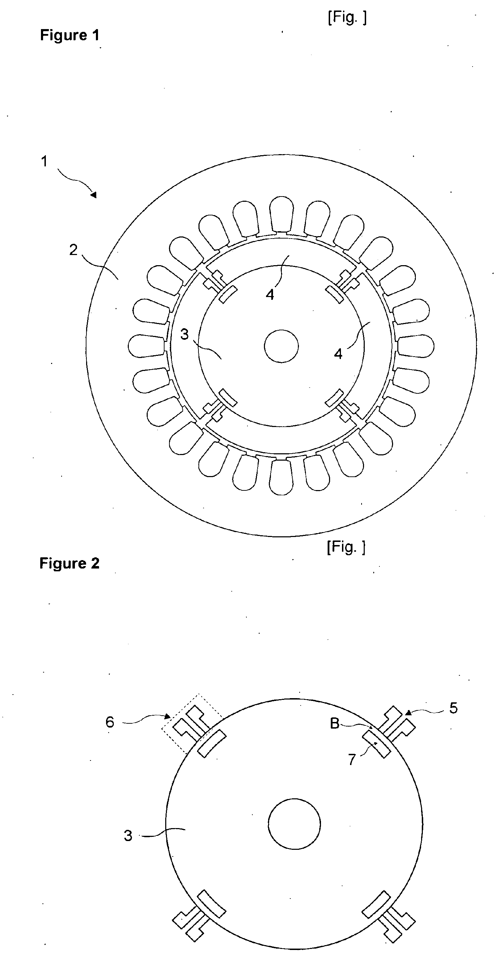

Figure 1 - is the schematic view of an electric motor.
Figure 2 - is the schematic view of a rotor.

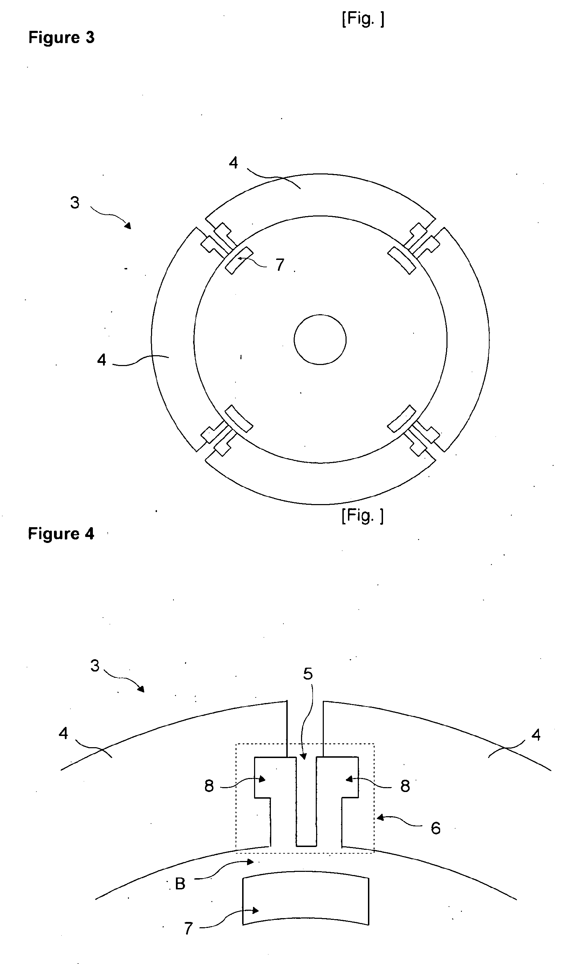

Figure 3 - is the schematic view of a rotor with magnets attached on it.
Figure 4 - is the schematic view of magnet holders of a permanent magnet rotor, the air gap and the insulation hole.
Figure 5 - is the perspective view of a magnet.
Figure 6 - is the schematic view of magnet holders on a rotor surface.
Figure 7 - is the schematic view of magnet holders on a rotor surface in another embodiment.

Elements shown in figures are numbered as follows:
1. Electric motor
2. Stator
3. Rotor
4. Magnet
5. Air gap
6. Magnet holder
7. Flux insulation hole
8. Protrusion
9. Channel

The electric motor (1) comprises a stator (2) forming its stationary part, and a permanent magnet rotor (3) moving inside the stator (2), formed as a stack of lamination plates by stacking the lamination plates produced of ferromagnetic material, preferably steel sheet, one over the other.

The rotor (3) comprises more than one arc segments of magnets (4), attached adjacently on its outer surface, forming a magnetic field between the consecutive opposite poles, interacting with the magnetic field created by the current delivered to the stator (2) windings and providing the rotor (3) to rotate inside the stator (2) by generating a torque.

In the embodiment of the present invention, the rotor (3) comprises a magnet holder (6) :
- positioned peripherally on its outer surface, spaced apart equidistantly,
- projecting radially outward,
- providing the magnets (4) to be assembled on both of its sides,
- having a slit shaped air gap (5) at its center, blocking flux leakage between adjacent magnets (4), and
a flux insulation hole (7) situated
- on the rotor (3) lamination yoke,
- aligned with the air gap (5) at the center of the magnet holder (6)
that prevents the flux leakage trying to reach from one magnet (4) towards the other from around the air gap (5).
In the embodiment of the present invention, the rotor (3) furthermore comprises a flux insulation region (B),
- between the magnet holder (6) and the flux insulation hole (7),
- to where the flux is intensely directed, trying to pass from one magnet (4) to the other through the flux insulation hole (7) and the air gap (5) and serving as a flux leakage barrier - flux insulator like the insulation hole (7) by becoming saturated with the magnetic flux (becoming blocked by dense magnetic flux) serving as a flux leakage barrier - flux insulator like the insulation hole (7)
- providing to hold the magnet holder (6) without disrupting the circular configuration of the rotor (3) lamination.

The rotor (3) furthermore comprises two protrusions (8) situated on the right and left of the magnet holder (6), that hold the magnets (4) by extending inwards from the side walls of the magnets (4) on each side of the magnet holder (6), and preventing dislocation of the magnets (4) from the rotor (3) surface by the centrifugal force.

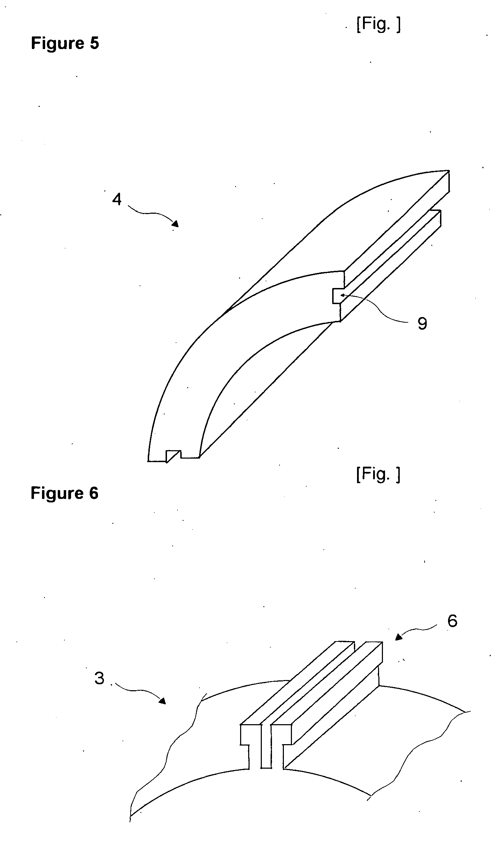

The magnet (4) comprises one or more channels (9) on its side surface, shaped like a recess, not exceed its upper surface and formed below the upper surface at any level, into which the protrusions (8) are inserted (Figure 5). Since the channel (9) does not exceed over to the upper surface of the magnet (4), it does not decrease the upper surface area facing the inner surface of the stator (2) and having an active role in flux transmission and active flux interaction is provided between the rotor (3) and the stator (2).

In an embodiment of the present invention, the magnet holder (6) extends along the outer surface of the rotor (3) stack from one end to the other (Figure 6).

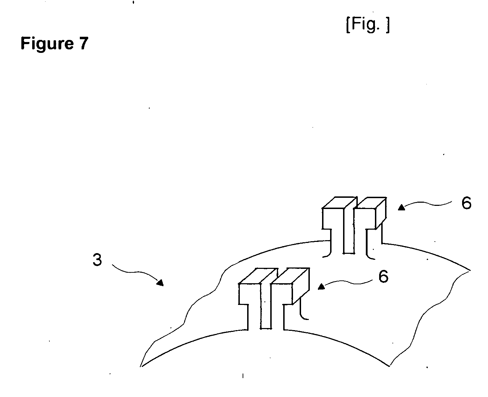

In another embodiment of the present invention, more than one magnet holders (6), separate from each other, are situated on the same axial direction on the outer surface of the rotor (3) stack (Figure 7).

The lamination plates forming the rotor (3) are produced in a lamination mould from steel sheets such that magnet holders (6) spaced equidistantly, are situated peripherally on their outer edges. The magnet holders (6) with lamination plates are stacked one over the other and the rotor (3) stack is formed. The magnets (4) are positioned between the magnet holders (6) such that the protrusions (8) are fitted in the channels (9) and are attached on the upper surface of the rotor (3) without the need for use of adhesives.

In the electric motor (1) of the present invention, flux leakage between the magnets (4) is prevented by the flux insulation region (B) beneath the air gap (5) at the center of the magnet holder (6) and the flux insulation hole (7), increasing the performance of the electric motor (1). The protrusions (8) hold the magnets (4) from the channels (9) on the side walls of the magnets (4) preventing dislocation of the magnets (4) from the rotor (3) surface due to the effect of centrifugal force and since the channels (9) bored on the side walls of the magnets (4) do not exceed the upper surface, the active upper surface area of the magnet (4) facing the stator (2) is maximized, enhancing the efficiency of the electric motor (1).

## Claims

1. An electric motor (2) comprising
- a stator (2) as stationary part,
- a permanent magnet rotor (3) moving inside the stator (2), formed as a stack of laminations by stacking one over the other lamination produced of ferromagnetic material, preferably steel sheet,
- more than one arc/segment shaped magnet (4), creating a magnetic field between the adjacent opposite poles for the rotor (3) to rotate inside the stator (2) by generating a torque and attached adjacently on the outer surface of the rotor (3),
- a magnet holder (6) positioned peripherally on the outer surface of the rotor (3), spaced apart equidistantly, projecting outwardly in radial direction, providing the magnets (4) to be assembled on both sides of the said magnet holder (6) and having an air gap (5) that is in a slit shape at the center of the said magnet holder (6), blocking flux leakage between adjacent magnets (4),
**and characterized by**
a flux insulation hole (7):
- situated in the rotor (3) lamination yoke,
- aligned with the air gap (5) at the center of the magnet holder (6) and
- preventing the flux leakage trying to reach from one magnet (4) towards the other from around the air gap (5).

2. An electric motor (1) as in Claim 1, **characterized by** the rotor (3) comprising a flux insulation region (B) between the magnet holder (6) and the flux insulation hole (7), to where the flux is intensely directed, trying to pass from one magnet (4) to the other through the flux insulation hole (7) and the air gap (5) and becoming saturated with magnetic flux, serving as a flux leakage barrier - flux insulator like the insulation hole (7), providing to hold the magnet holder (6) without disrupting the circular configuration of the rotor (3) lamination.

3. An electric motor (1) as in Claim 1 or 2, **characterized by** the rotor (3) comprising two protrusions (8), situated on the right and left of the magnet holder (6), that prevent dislocation of the magnets (4) from the rotor (3) surface by the centrifugal force by extending inwards from the lateral surfaces of the magnets (4) on each side of the magnet holder (6).

4. An electric motor (1) as in Claim 3, **characterized by** the rotor (3) comprising the magnet (4) having one or more channels (9) on the side surface of the magnet (4), not exceeding the upper surface of the magnet (4) and bored below the upper surface at any level, shaped like a recess into which the protrusions (8) are inserted.

5. An electric motor (1) as in any one of the above claims, **characterized by** the rotor (3) comprising the magnet holder (6) on the outer surface of the rotor (3) that extends along from one end to the other in the axial direction.

6. An electric motor (1) as in any one of the Claims 1 to 4, **characterized by** the rotor (3) comprising more than one magnet holder (6) on the outer surface of the rotor (3), in the same axial direction, separate from each other.

## Patentansprüche

1. Elektromotor (2), umfassend
- einen Stator (2) als stationäres Element,
- einen Permanentmagnetrotor (3), der sich im Stator (2) bewegt, und der als ein Stapel von Lamellierungen ausgebildet ist, wobei eine Lamellierung auf die andere gestapelt ist und aus ferromagnetischem Material hergestellt ist, vorzugsweise Stahlblech,
- mehrere bogen-/kreissegmentförmige Magnete (4), die zwischen den benachbarten gegenüberliegenden Polen ein Magnetfeld für den Rotor (3) erzeugen, damit dieser sich im Stator (2) dreht, indem ein Drehmoment erzeugt wird, und die zueinander benachbart an der Außenfläche des Rotors (3) angeordnet sind,
- einen Magnethalter (6), der in gleichmäßigem Abstand an der Außenumfangsfläche des Rotors (3) angeordnet ist und in Radialrichtung nach außen vorspringt und es ermöglicht, die Magnete (4) an beiden Seiten des Magnethalters (6) anzubringen, und der einen Luftspalt (5) aufweist, der schlitzförmig in der Mitte des Magnethalters (6) angeordnet ist, und der eine magnetische Kraftlinienstreuung zwischen benachbarten Magneten (4) blockiert,
**und gekennzeichnet durch**
eine Kraftflussisolationsöffnung (7):
- die im Lamellierungsjoch des Rotors (3) angeordnet ist,
- die mit dem Luftspalt (5) in der Mitte des Magnethalters (6) fluchtet und
- die verhindert, dass die magnetische Kraftlinienstreuung um den Luftspalt (5) herum von einem Magnet (4) zum anderen reicht.

2. Elektromotor (1) nach Anspruch 1, **dadurch gekennzeichnet, dass** der Rotor (3) eine Kraftflussisolationsregion (B) zwischen dem Magnethalter (6) und der Kraftflussisolationsöffnung (7) umfasst, auf die der Kraftfluss, der versucht, durch die Kraftflussisolationsöffnung (7) und den Luftspalt (5) von einem Magnet (4) zum anderen zu gelangen, intensiv gerichtet wird, und die durch den magnetischen Kraftfluss gesättigt wird und als eine Kraftlinienstreuungsbarriere, ein Kraftflussisolator wie die Isolationsöffnung (7) dient, und es ermöglicht, den Magnethalter (6) zu halten, ohne die kreisförmige Konstruktion der Lamellierung des Rotors (3) zu unterbrechen.

3. Elektromotor (1) nach Anspruch 1 oder 2, **dadurch gekennzeichnet, dass** der Rotor (3) zwei Vorsprünge (8) umfasst, die rechts und links vom Magnethalter (6) angeordnet sind, und die verhindern, dass sich die Magnete (4) aufgrund der Zentrifugalkraft von der Fläche des Rotors (3) fortbewegen, indem sie sich von den Seitenflächen der Magnete (4) zu den Seiten des Magnethalters (6) nach innen erstrecken.

4. Elektromotor (1) nach Anspruch 3, **dadurch gekennzeichnet, dass** der Rotor (3) den Magnet (4) umfasst, der einen oder mehrere Kanäle (9) an der Seitenfläche des Magnets (4) aufweist, die nicht über die Oberfläche des Magnets (4) hinausreichen, und die in beliebiger Höhe unter der Oberfläche ausgebildet sind und wie eine Vertiefung ausgebildet sind, in die die Vorsprünge (8) eingeführt werden.

5. Elektromotor (1) nach einem der vorangehenden Ansprüche, **dadurch gekennzeichnet, dass** der Rotor (3) den Magnethalter (6) an der Außenfläche des Rotors (3) umfasst, der sich in Axialrichtung von einem Ende zum anderen erstreckt.

6. Elektromotor (1) nach einem der Ansprüche 1 bis 4, **dadurch gekennzeichnet, dass** der Rotor (3) den mehrere Magnethalter (6) an der Außenfläche des Rotors (3) umfasst, die sich separat voneinander in dieselbe Axialrichtung erstrecken.

## Revendications

1. Un moteur électrique (2) comprenant
- un stator (2) comme la partie fixe
- un rotor d'aimant permanent (3) déplaçant à l'intérieur du stator (2), formé comme un empilement de feuilletage en empilant les unes sur les autres produits d'un matériau ferromagnétique, de préférence en tôle d'acier,
- plus d'un aimant en forme d'un arc/segment (4), créant un champ magnétique entre les pôles adjacents et opposés pour le rotor (3) de tourner à l'intérieur du stator (2) en générant un couple et attachés à côté de la surface extérieure du rotor (3),
- un support d'aimant (6) placé périphériequement sur la surface extérieure du rotor (3), espacé équidistantement, saillant extérieurement dans la direction radiale, en permettant aux aimants (4) d'être assemblé sur les deux de ledit support d'aimant (6) et ayant un espace d'air (5) qui est en forme de fente au centre de ledit support d'aimant (6), bloquant la fuite de flux entre les aimants adjacents (4),
**et caractérisé par**
un trou d'isolation de flux (7):
- situé dans la culasse de feuilletage de rotor (3),
- aligné avec l'espace d'air (5) au centre du support d'aimant (6) et
- empêchant la fuite de flux en essayant d'atteindre d'un aimant (4) vers l'autre à travers l'espace d'air (5).

2. Un moteur électrique (1) selon la revendication 1, **caractérisé par** le rotor (3) comprenant une région d'isolation de flux (B) entre le support d'aimant (6) et le trou d'isolation de flux (7), à l'endroit où le flux est dirigé intensément, en essayant de passer d'un aimant (4) à l'autre à travers le trou d'isolation de flux (7) et l'espace d'air (5) et devenant saturé de flux magnétique, agissant comme une barrière de fuite de flux- isolateur de flux, comme le trou d'isolation (7), en permettant de tenir le support d'aimant (6) sans perturber la configuration circulaire du feuilletage de rotor (3).

3. Un moteur électrique (1) selon la Revendication 1 ou 2, **caractérisé par** le rotor (3) comprenant deux saillies (8) situé à droite et gauche du support d'aimant (6), qui empêche la dislocation des aimants (4) de la surface du rotor (3) par la force centrifuge en étendant à l'intérieur par les faces latérales des aimants (4) sur chaque côté du support d'aimant (6).

4. Un moteur électrique (1) selon la Revendication 3, **caractérisé par** le rotor (3) comprenant l'aimant (4) ayant un ou plusieurs canaux (9) sur la surface latérale de l'aimant (4), ne dépassant pas la surface supérieure de l'aimant (4) et supporté en dessous de la surface supérieure à n'importe quel niveau, en forme d'une cavité dans laquelle les saillies (8) sont insérées.

5. Un moteur électrique (1) selon l'une quelconques des revendications précédentes, **caractérisé par** le rotor (3) comprenant le support d'aimant (6) sur la surface extérieur du rotor (3) qui s'étend le long d'un bout à l'autre dans le sens axial.

6. Un moteur électrique (1) selon l'une quelconque des revendications de 1 à 4, **caractérisé par** le rotor (3) comprenant plus d'un support d'aimant (6) sur la surface extérieur du rotor (3), dans le même sens axial, séparés les uns aux autres.
